# EUROPÄISCHE PATENTSCHRIFT

(11) **EP 3 166 450 B1**
(45) Veröffentlichungstag und Bekanntmachung des Hinweises auf die Patenterteilung: **03.10.2018**
(21) Anmeldenummer: 15726172.8
(22) Anmeldetag: 03.06.2015
(51) Int. Cl.: A47J 31/36

(54) **VERFAHREN UND VORRICHTUNG ZUR ZUBEREITUNG EINES BRÜHGETRÄNKS**
METHOD AND APPARATUS FOR PREPARING A BREWED BEVERAGE
PROCÉDÉ ET DISPOSITIF DE PRÉPARATION D'UNE BOISSON INFUSÉE

(30) Priorität: 11.07.2014 DE 102014109765
(43) Veröffentlichungstag der Anmeldung: 17.05.2017
(73) Patentinhaber: Melitta Single Portions GmbH & Co. KG, 32425 Minden (DE)
(72) Erfinder: HESSELBROCK, Katrin, 49086 Osnabrück (DE); NEUHAUS, Sven, 32549 Bad Oeynhausen (DE); PAHNKE, Jan, 32427 Minden (DE); SCHANDL, Gerold, 32425 Minden (DE); KÖHLER, Robert, 64372 Ober-Ramstadt (DE); UNGERER, Markus, 64367 Mühltal (DE); WEBER, Thomas, 64367 Mühltal (DE)
(74) Vertreter: Dantz, Jan Henning
(86) Internationale Anmeldenummer: PCT/EP2015/062356
(87) Internationale Veröffentlichungsnummer: WO 2016/005110

(56) Entgegenhaltungen:
- EP-A1- 1 937 118
- EP-A1- 2 543 290
- FR-A1- 2 908 970

## Beschreibung

Die vorliegende Erfindung betrifft ein Verfahren und eine Vorrichtung zur Zubereitung eines Brühgetränkes nach den Oberbegriffen der Ansprüche 1 und 6.

Die EP 1 937 118 offenbart eine Vorrichtung zur Zubereitung eines Aufgussgetränkes, bei der ein Aufgussbehälter und eine Kapsel zur Herstellung eines Aufgussgetränkes, insbesondere Tee, mit heißem Wasser aufgegossen werden. Nach dem Ablassen des Aufgussgetränkes wird ein Reinigungsmittel in den Aufgussbehälter eingebracht, bevor die Kapsel entfernt wird. Zwar sorgt die Kapsel für eine gewisse Abdichtung des Aufgussbehälters, allerdings führt das Injizieren von Reinigungsmittel zu dem Problem, dass am Auslass des Aufgussbehälters keine reine Spülflüssigkeit vorhanden ist, sondern Reste des Aufgussgetränkes aus der Kapsel. Dadurch ist zumindest in einem unteren Bereich des Aufgussbehälters das Reinigungsergebnis unbefriedigend.

In der EP 2 159 167 ist eine Vorrichtung zur Herstellung eines Brühgetränkes offenbart. Für den Brühvorgang wird die Kapsel an der Rückseite aufgestochen, und dann wird über eine Nadel Flüssigkeit in die Kapsel injiziert, die dann durch ein Sieb an einer Seite der Kapsel in die Brühkammer strömen kann. Diese Brühvorrichtung kann weitgehend drucklos arbeiten und auch zur Herstellung von Tee eingesetzt werden. Nach dem Brühen kann die Brühvorrichtung gespült werden.

Die EP 2 543 290 A1 offenbart eine Brühvorrichtung mit einer teilbaren Brühkammer, in die eine Kapsel für einen Brühvorgang einfügbar ist.

Es ist daher Aufgabe der vorliegenden Erfindung, ein Verfahren und eine Vorrichtung zur Zubereitung eines Brühgetränkes zu schaffen, die eine effektive Handhabung ermöglichen und wobei das Spülergebnis verbessert ist.

Diese Aufgabe wird mit einem Verfahren mit den Merkmalen des Anspruches 1 und einer Vorrichtung mit den Merkmalen des Anspruches 6 gelöst.

Bei dem erfindungsgemäßen Verfahren wird zunächst eine Kapsel an einer seitlichen Öffnung der Brühkammer positioniert und dann ein Getränk in der Brühkammer zubereitet, das ggfs. nach einer gewissen Ziehzeit von z.B. mehr als 30 Sekunden, an der Unterseite der Brühkammer in ein Gefäß abgegeben wird. Anschließend wird die Kapsel von der seitlichen Öffnung entfernt und die Brühkammer gespült. Dadurch ist sichergestellt, dass keine Reste aus der Kapsel beim Spülvorgang die Brühkammer verunreinigen. Zwar kann nach dem Entfernen der Kapsel die seitliche Öffnung zumindest teilweise von Spülflüssigkeit durchlaufen werden, allerdings kann die seitliche Öffnung oberhalb eines Sammelbehälters angeordnet werden, so dass austretende Spülflüssigkeit dort gesammelt wird und kein Problem darstellt. Zudem wird das Reinigungsergebnis verbessert, da die Kapsel unmittelbar nach dem Brühvorgang, vor dem Spülen automatisch ausgeworfen wird und die Spülflüssigkeit nicht mit Resten der Inhaltsstoffe der Kapsel kontaminiert wird. Die Reinigung kann zudem unmittelbar nach einem Brühvorgang erfolgen, was gerade beim Brühen von Tee vorteilhaft ist, um ein Antrocknen zu vermeiden.

Erfindungsgemäß wird nach dem Brühvorgang die Brühkammer zusammen mit einem Einfüllstutzen verfahren, um den Einfüllstutzen von einer Einfüllposition oberhalb einer Durchführung zum Befüllen des Gefäßes in eine Spülposition oberhalb eines Leitelementes zu bewegen, um dann die Brühkammer zu spülen. Dadurch ist sichergestellt, dass die Spülflüssigkeit auf das Leitelement trifft und von dort in ein Sammelbecken abgeleitet werden kann und somit das Brühgetränk in dem Gefäß nicht kontaminiert werden kann.

Vorzugsweise wird beim Spülen erhitztes Wasser eingesetzt, das über einen oberen Einlass in die Brühkammer eingebracht wird. Somit können sämtliche Wände des Innenraumes der Brühkammer mit Spülflüssigkeit benetzt werden, so dass alle mit Tee benetzten Komponenten gespült werden.

In einer weiteren Ausgestaltung wird nach dem Brühvorgang die Brühkammer relativ zu einem Einwurfschacht für die Kapsel verfahren, um die Kapsel in einen Sammelbehälter abzuwerfen. Beim Verfahren kann die Kapsel gegen einen Anschlag bewegt werden, wenn die Kapsel an einer Dichtung der Brühkammer anhaften sollte. Dadurch wird ein sicheres Entfernen der Kapsel vor dem Spülvorgang gewährleistet.

Bei der erfindungsgemäßen Vorrichtung sind an der Brühkammer ein Einlass zum Einleiten von heißem Wasser und ein Auslass vorgesehen, wobei an dem Einlass eine Düse mit mehreren über den Umfang verteilten Öffnungen vorgesehen ist. Dadurch kann über die Düse sowohl heißes Wasser zur Einleitung des Brühvorganges eingeleitet werden, als auch heißes Wasser für einen Spülvorgang. Der Einlass kann somit auch zum Spülen eingesetzt werden, wobei die über den Umfang verteilten Öffnungen an der Düse dafür sorgen, dass die Wände zum Innenraum der Brühkammer flächig benetzt werden, insbesondere vollflächig. Dies wird durch einen parabelförmigen oberen Bereich der Brühkammer noch verstärkt und ermöglicht ein sehr gutes Spülergebnis. Das Einspritzen von Spülflüssigkeit oberhalb der seitlichen Öffnung führt zudem nur zu geringen Spülflüssigkeitsverlusten an der seitlichen Öffnung, da ein Teil des Spülflüssigkeitsfilms um die Öffnung herumströmt.

Für das Verfahren der Brühkammer ist eine Antriebseinrichtung vorgesehen, insbesondere ein Elektromotor mit einem Spindelantrieb, um die Brühkammer zwischen einer Brühposition, einer Einwurfposition und einer Spülposition verfahren zu können.

Vorzugsweise steht die Düse mit einer Spitze in einen Innenraum der Brühkammer hervor und kann mehrere über den Umfang verteilte Öffnungen aufweisen, so dass über die Öffnungen der Düse Spülflüssigkeit in unterschiedliche Richtungen in die Brühkammer injiziert werden kann. Die Düse ist dabei vorzugswiese an einem oberen Einlass der Brühkammer angeordnet, während an der Unterseite der Brühkammer ein schaltbares Ventil vorgesehen ist, um die Brühzeit innerhalb der Brühkammer steuern zu können.

Für das Brühen von Tee kann das Volumen der Brühkammer mindestens doppelt so groß, insbesondere mindestens viermal so groß sein wie das Volumen der Kapsel. Das Volumen der Brühkammer ohne Kapsel kann beispielsweise in einem Bereich zwischen 0,1 l bis 1 l, vorzugsweise 0,15 l bis 0,7 l, liegen.

Für das Verfahren der Brühkammer ist vorzugsweise eine Antriebseinrichtung vorgesehen, insbesondere ein Elektromotor mit einem Spindelantrieb, um die Brühkammer zwischen einer Brühposition, einer Einwurfposition und einer Spülposition verfahren zu können.

Die Erfindung wird nachfolgend anhand eines Ausführungsbeispiels mit Bezug auf die beigefügten Zeichnungen näher erläutert. Es zeigen:

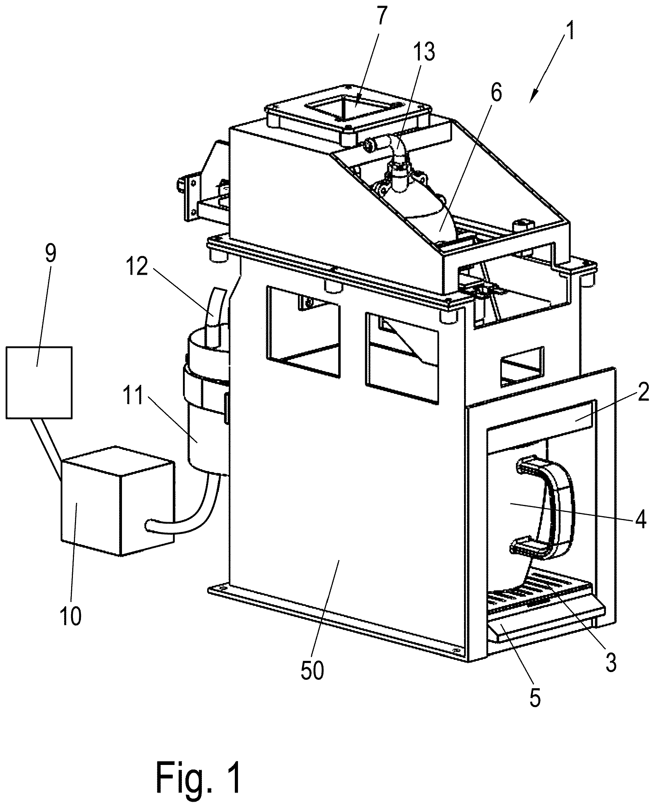

- Figur 1: eine perspektivische Ansicht einer Vorrichtung zur Zubereitung eines Brühgetränks;
- Figur 2: eine perspektivische Ansicht der Vorrichtung der Figur 1 ohne Gehäuse;
- Figur 3: Schnittdarstellung der Vorrichtung der Figur 1 ohne Gehäuse vor dem Einwurf der Kapsel;
- Figur 4: Schnittdarstellung der Vorrichtung der Figur 1 ohne Gehäuse beim Einwurf der Kapsel;
- Figur 5: Schnittdarstellung der Vorrichtung der Figur 1 mit der Kapsel in der Brühposition;
- Figur 6: Schnittdarstellung der Vorrichtung der Figur 1 nach dem Auswurf der Kapsel in einer Spülposition;
- Figur 7: eine perspektivische Detailansicht der Brühkammer der Vorrichtung der Figur 1 mit der Kapsel in der Brühposition;
- Figur 8: eine Aufsicht auf den Einwurfschacht der Vorrichtung der Figur 1;
- Figur 9: eine geschnittene perspektivische Ansicht der Kapsel, und
- Figur 10: eine geschnittene perspektivische Ansicht einer weiteren Ausführungsform der Kapsel.

Eine Vorrichtung 1 zur Zubereitung von Brühgetränken umfasst einen herausnehmbaren Sammelbehälter 2, der in einem Gehäuse 50 angeordnet ist. Der Sammelbehälter 2 besteht vorzugsweise aus zwei Teilen: einem Behälter mit wasserdurchlässigem Boden zum Auffangen von Kapseln und einem darunterliegenden Behälter zum Sammeln von Wasser. An dem Sammelbehälter 2 ist eine Auflage 3 mit Öffnungen zum Abstellen eines Gefäßes 4 angeordnet. Unterhalb der Auflage 3 ist ein Griffabschnitt 5 zum Herausziehen des Sammelbehälters 2 vorgesehen.

Die Vorrichtung 1 zur Zubereitung von Brühgetränken umfasst ferner eine Brühkammer 6, die neben einem Einwurfschacht 7 für Kapseln vorgesehen ist.

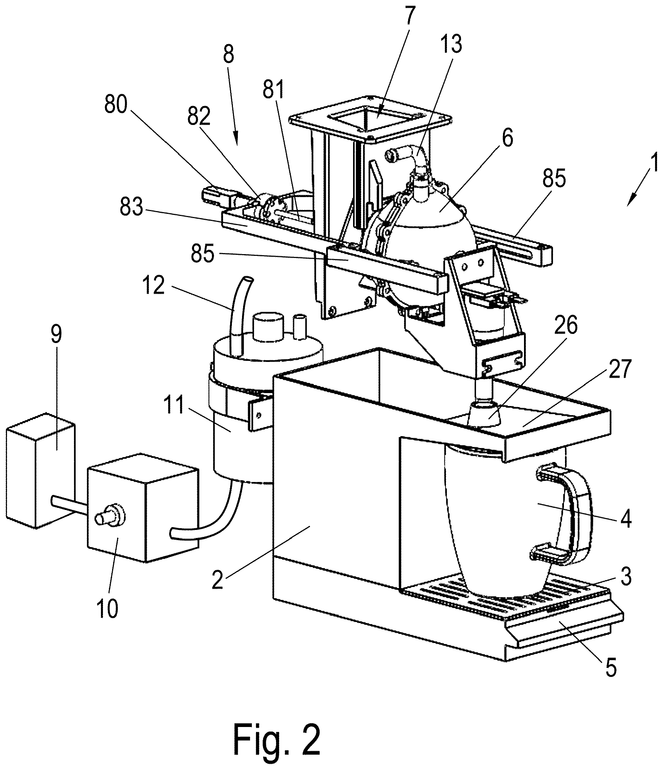

Wie in Figur 2 gezeigt ist, befindet sich der Einwurfschacht 7 für Kapseln zwischen der Brühkammer 6 und einer Antriebseinrichtung 8. Über die Antriebseinrichtung 8 kann die Brühkammer 6 relativ zu dem Einwurfschacht 7 verfahren werden. Hierfür ist ein Elektromotor 80 vorgesehen, der über ein Getriebe eine Spindel 81 antreibt, auf der eine Spindelmutter 82 drehfest gelagert ist.

Durch Drehen der Spindel 81 werden mit der Spindelmutter 82 verbundene Arme 83 linear verfahren. Die Arme 83 umgreifen die Brühkammer 6 an gegenüberliegenden Seiten sind an linearen Führungen 85 geführt. Die Führung 85 kann beispielsweise als Nut oder Schiene ausgebildet sein. Die Brühkammer 6 ist dadurch linear bewegbar.

Die Vorrichtung 1 zur Zubereitung von Brühgetränken umfasst ferner einen schematisch dargestellten Tank 9 für Frischwasser, der abnehmbar ausgebildet sein kann. Der Tank 9 ist mit einer Pumpe 10 verbunden, über die eine Heizeinrichtung 11 in Form eines Boilers gespeist wird. Von der Heizeinrichtung 11 führt eine Leitung 12, die in Figur 2 nur teilweise dargestellt ist, zu einer Einlassleitung 13 oberhalb der Brühkammer 6. Zwischen der Einlassleitung 13 und dem Tank 9 kann optional auch ein Filter vorgesehen sein.

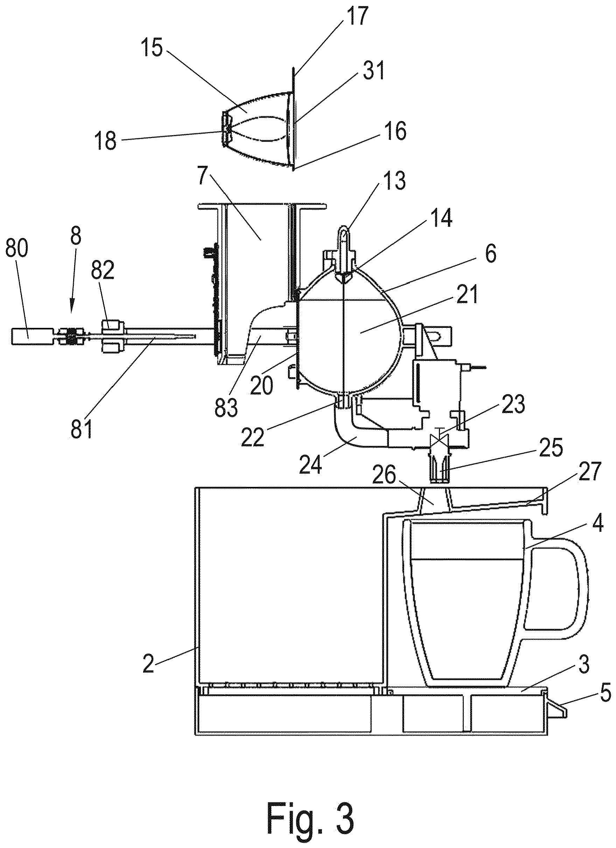

In Figur 3 ist die Vorrichtung 1 im Detail dargestellt. Oberhalb des Einwurfschachtes 7 ist eine Kapsel 15 vorgesehen, die topfförmig ausgebildet ist und an einer Seite eine Öffnung aufweist, die mit einem Sieb 31 verschlossen ist. Das Sieb 31 ist dabei an einem Rand 16 fixiert, der asymmetrisch ausgebildet ist und an einer Seite einen hervorstehenden Abschnitt 17 als Griffbereich aufweist. Durch ebenfalls asymmetrische Führungsmittel am Boden der Kapsel 15 wird diese dadurch in einer vorbestimmten Position und Ausrichtung in den Einwurfschacht 7 eingeworfen, der eine entsprechende Aussparung mit Führungsmitteln für die Positionierung der Kapsel 15 aufweist. Auf der zur Öffnung gegenüberliegenden Seite weist die Kapsel 15 einen Boden 18 auf, an dem Markierungen zur Identifizierung der Kapsel 15 angeordnet sind. Solche Markierungen können als Farbcodierung, optische Codierung, elektromagnetische Codierung oder sonst wie ausgebildet sein, um in einer vorbestimmten Position einen bestimmten Kapseltyp zu identifizieren. Durch ein Auslesen der Codierung der Kapsel 15 an der Vorrichtung kann über eine Steuerung die Füllmenge an heißem Wasser für die Brühkammer 6, die Temperatur und die Verweilzeit eingestellt werden. Auch die Steuerung anderer Parameter über die Codierung ist möglich.

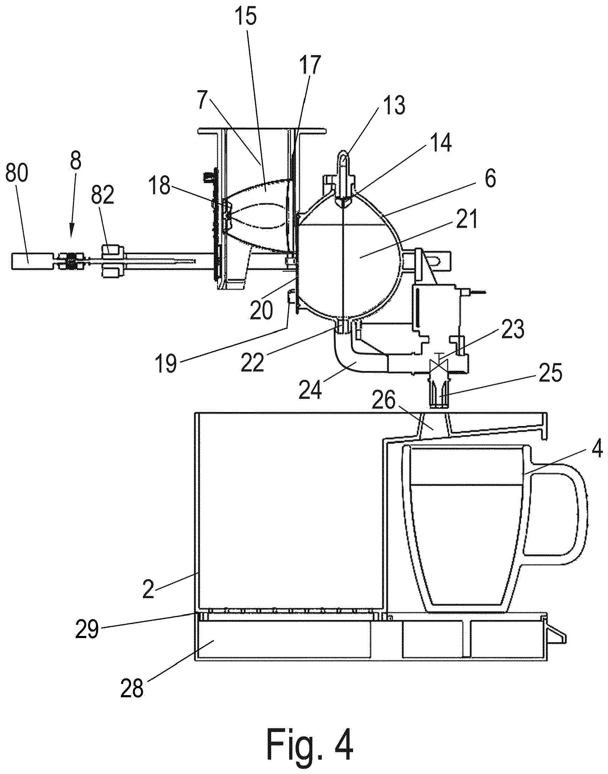

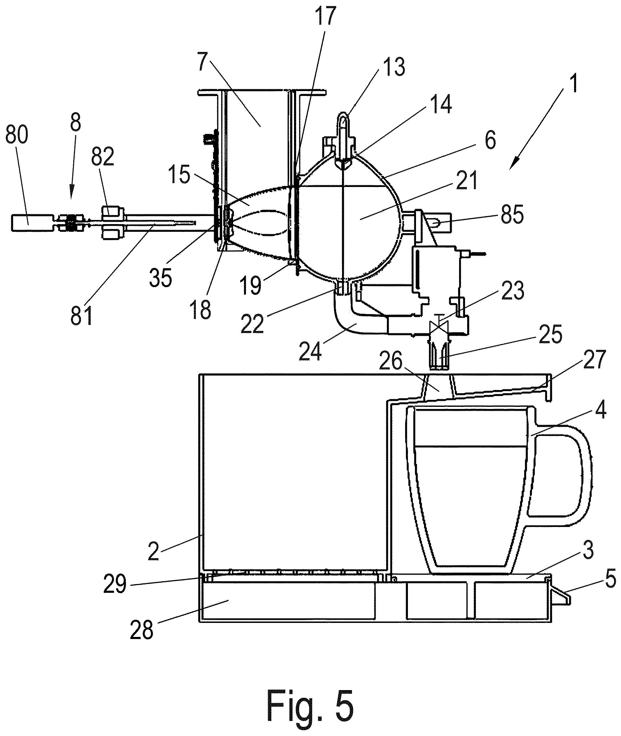

Für den Brühvorgang wird die Kapsel 15 zunächst in den Einwurfschacht 7 eingefügt, wie dies in Figur 4 gezeigt ist. Die Kapsel 15 gleitet nach unten, bis sie an einer seitlichen Öffnung 20 der Brühkammer 6 angeordnet ist. Hierfür sind an der Außenseite der Brühkammer 6 Halter 19 vorgesehen, die verhindern, dass die Kapsel 15 über die in Figur 5 gezeigte Position nach unten herausrutscht. In Figur 5 ist die Brühposition gezeigt, in die die Brühkammer 6 nach dem Einwerfen der Kapsel 15 verfahren wird. Hierfür wird über den Elektromotor 80 die Spindel 81 gedreht, um die Arme 83 entlang der Führung 85 in Figur 5 nach links zu verfahren, und um somit eine Dichtung benachbart zu der Öffnung 20 an der Brühkammer 6 gegen den Rand 16 der Kapsel 15 zu drücken und für eine Abdichtung zu sorgen. Die Kapsel 15 und ein Innenraum 21 der Brühkammer 6 bilden somit eine Einheit, wobei der Innenraum 21 der Brühkammer 6 und das Innere der Kapsel 15 durch das Sieb 31 voneinander getrennt sind. Der Innenraum 21 der Brühkammer 6 ist dabei ein Vielfaches größer als ein Innenraum der Kapsel 15, beispielsweise um mehr als vier mal so groß, so dass das Brühgetränk sich vorwiegend in der Brühkammer 6 befindet und nur ein kleinerer Teil in der Kapsel 15, was das Ausgeben des Brühgetränkes vereinfacht.

In der Brühposition wird nun über die Einlassleitung 13 heißes Wasser aus der Heizeinrichtung 11 in die Brühkammer 6 eingeleitet, wobei hierfür am Ende der Einlassleitung 13 eine Düse 14 vorgesehen ist, die mit einer Spitze in den Innenraum 21 der Brühkammer 6 hervorsteht. Die Brühkammer 6 weist am unteren Ende einen Auslass 22 auf, der über eine Leitung 24 mit einem Ventil 23 verbunden ist. Durch Schließen des Ventils 23 wird das eingeleitete heiße Wasser in der Brühkammer 6 gesammelt und steigt über den Auslass 22 an, um das in der Kapsel 15 enthaltene Material zum Brühen eines Getränkes, insbesondere Tee, zu erreichen. Durch ein vorheriges Auslesen der Codierung an der Kapsel 15 durch ein Lesegerät 35 kann über die Steuerung die Zubereitung des Brühgetränkes individuell angepasst werden, beispielsweise kann grüner Tee anders zubereitet werden als schwarzer Tee, Früchtetee oder ein anderes Brüh- oder Aufgussgetränk. Zudem kann über das Auslesen der Codierung ein Reinigungsprogramm oder ein Serviceprogramm gestartet werden.

Nach dem Brühvorgang kann das Ventil 23 geöffnet werden, damit das Brühgetränk aus der Brühkammer 6 über den Auslass 22, die Leitung 24 in einen Auslassstutzen 25 strömt, von dem es in ein Gefäß 4 eingeleitet wird. Zwischen dem Auslassstutzen 25 und dem Gefäß 4 befindet sich eine Durchführung 26 bzw. eine Öffnung, so dass das heiße Getränk ungehindert in das Gefäß 4 einströmen kann. Nach der Zubereitung des Brühgetränks kann das Ventil 23 wieder geschlossen werden.

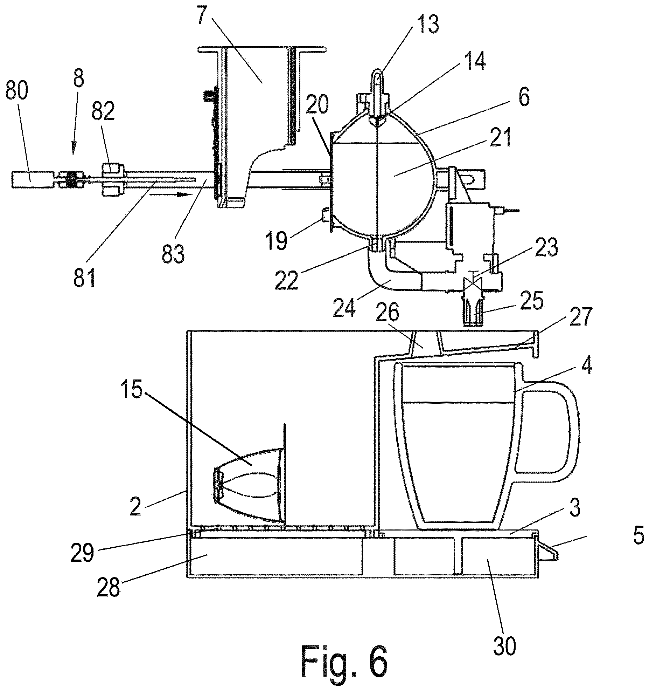

Nach dem Brühvorgang kann die Brühkammer 6 über die Antriebseinrichtung 8 entsprechend dem Pfeil in Figur 6 verfahren werden, so dass die Kapsel 15 aus der Halteposition benachbart zu der seitlichen Öffnung 20 an der Brühkammer 6 entfernt wird und nach unten herabfällt. Die Kapsel 15 fällt dabei in den Sammelbehälter 2 auf ein Sieb 29 oder ein Gitter, das oberhalb eines Sammelbeckens 28 angeordnet ist. Durch das Verfahren der Brühkammer 6 werden gleichzeitig auch die Leitung 24 und der Auslassstutzen 25 verfahren, der nun nicht mehr über der Durchführung 26, sondern über einem Leitelement 27 angeordnet ist. Nun kann die Brühkammer 6 gespült werden, indem heißes Wasser aus der Heizeinrichtung 11 über die Düse 14 in die Brühkammer 6 eingespritzt wird, so dass das heiße Wasser Rückstände des Brühvorganges entfernen kann. Das heiße Wasser kann dabei teilweise durch die Öffnung 20 in den Sammelbehälter 2 direkt eingeleitet werden und wird ansonsten über den Auslass 22 und die Leitung 24 in den Auslassstutzen 25 eingeleitet. Von dort gelangt das Spülwasser auf das Leitelement 27, das als schräger Boden oberhalb des Gefäßes 4 ausgebildet ist. Über das Leitelement 27 gelangt das Spülwasser in das Sammelbecken 28 des Sammelbehälters 2. Das Leitelement 27 kann statt als schräger Boden auch als Kanal oder Rinne ausgebildet sein.

Wird nach der Entnahme des Gefäßes 4 eine geringe Menge an Flüssigkeit durch den Durchlass 26 eingeleitet, kann diese Flüssigkeit in einem zweiten Sammelbecken 30 oder einer Tropfschale unterhalb des Siebes 31 gesammelt werden. Der Sammelbehälter 2 kann als Einheit aus dem Gehäuse 50 der Vorrichtung 1 entnommen werden, so dass die beiden Sammelbecken 28 und 30 an dem Sammelbehälter 2 entleert werden können. Zudem ist der Sammelbehälter 2 oberhalb des Siebes 29 abnehmbar, so dass auf einfache Weise auch die benutzten Kapseln 15 entleert werden können.

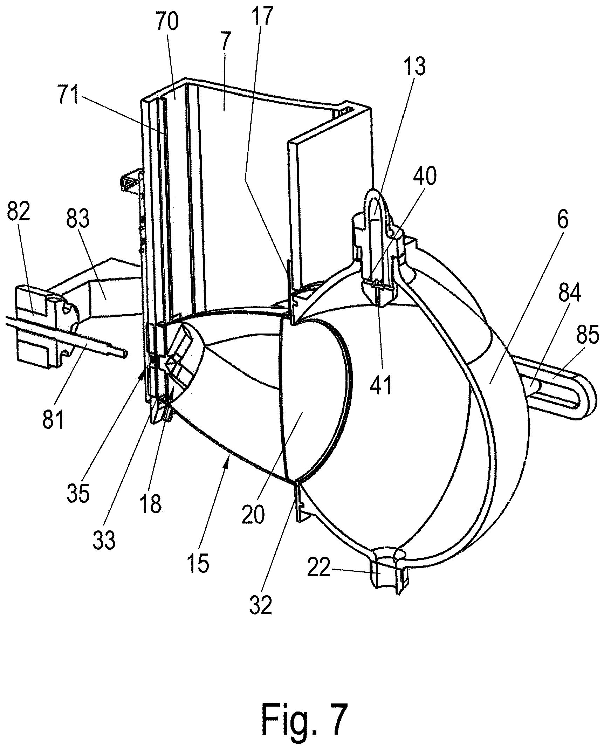

In Figur 7 ist die Brühkammer 6 im Detail dargestellt. An der Oberseite der Brühkammer 6 befindet sich die Düse 14, mittels der heißes Wasser für den Brühvorgang oder für den Spülvorgang eingeleitet wird. Die Düse 14 weist hierfür über den Umfang verteilt mehrere Öffnungen 40 auf, durch die das heiße Wasser in die Brühkammer 6 eingespritzt werden kann. Dadurch wird an den Seitenwänden der Brühkammer 6 ein Flüssigkeitsfilm gebildet, der einerseits zum Spülen und andererseits für den Brühvorgang genutzt werden kann. Zudem ist eine Öffnung 41 nach unten an der Düse 14 vorgesehen, durch die heißes Wasser eingespritzt werden kann, beispielsweise wenn heißes Wasser während des Brühvorganges nachgefüllt werden soll. Die Öffnungen 40 und 41 können dabei optional über Ventile schaltbar ausgebildet sein. Alternativ kann die Öffnung 41 auch nicht senkrecht nach unten, sondern in Richtung der Kapsel ausgeführt sein.

Die Brühkammer 6 ist im Wesentlichen kugelförmig ausgebildet und weist im oberen Bereich einen parabelförmigen Abschnitt auf, an dem die Düse 14 vorgesehen ist.

Die Brühkammer 6 besitzt an der Außenseite dabei Halter 84 oder Zapfen, die in der Führung 85 gelagert sind.

Die Brühkammer 6 kann ein Volumen zwischen 0,1 bis 1,0 l, insbesondere 0,15 l bis 0,7 l, aufnehmen, je nachdem, wie viele Portionen des Brühgetränks auf einmal zubereitet werden sollen.

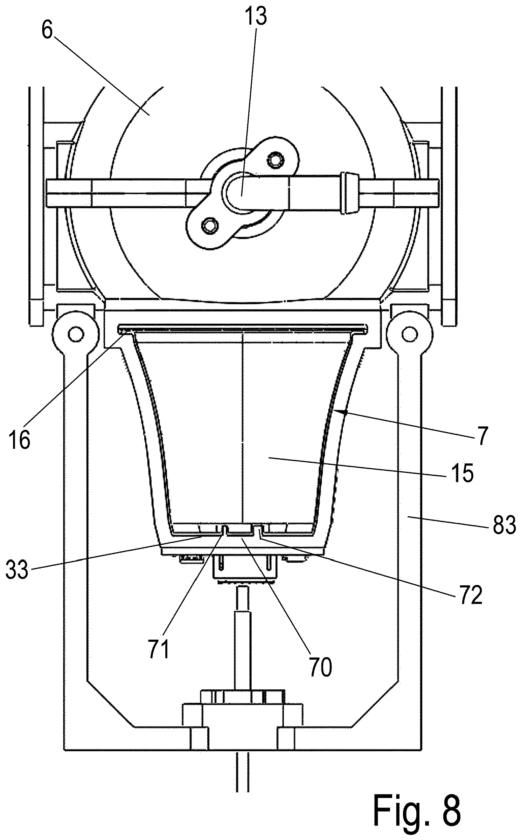

Ferner ist in den Figuren 7 und 8 zu sehen, dass der Einwurfschacht 7 auf der Seite des Bodens 18 der Kapsel 15 eine Fläche 70 aufweist, von der eine erste Führungsleiste 71 und eine zweite Führungsleiste 72 hervorstehen. Die Führungsleisten 71 und 72 weisen eine unterschiedliche Breite auf und sind zu einer Mittelebene der Kapsel 15 asymmetrisch ausgebildet, so dass die Kapsel 15 nur in einer vorbestimmten Position in den Einwurfschacht 7 eingeworfen werden kann.

Auf der Höhe der seitlichen Öffnung 20 ist benachbart zu dem Boden 18 der Kapsel 15 eine Bodenfläche 33 mit Nuten zur Aufnahme der Führungsleisten 71 und 72 vorgesehen, an der die Kapsel 15 nach dem Einwerfen abgestützt ist, wenn die Kapsel 15 an den Positionierungsmitteln 19 anliegt. In der Einwurfposition und der Brühposition wird somit verhindert, dass die Kapsel 15 in dem Einwurfschacht 7 herunterfallen kann. Wird die Brühkammer 6 nach dem Brühvorgang verfahren und von dem Einwurfschacht 7 entfernt, kann die Kapsel aufgrund der Schwerkraft nach unten in den Sammelbehälter 2 fallen. Hierbei kann es passieren, dass die Kapsel 15 mit dem Rand 16 an einer ringförmigen Dichtung 32 an der Brühkammer 6 anhaftet und mit der Brühkammer 6 gemeinsam verfahren wird. Damit eine Ablösung der Kapsel 15 sicher gewährleistet wird, kann in dem Verfahrweg der Kapsel ein Anschlag angeordnet sein, beispielsweise an dem nach oben ragenden Abschnitt 17, so dass die Kapsel 15 von der Brühkammer 6 nach einem bestimmten Verfahrweg gelöst wird und sichergestellt ist, dass die Kapsel 15 in den Sammelbehälter 2 herabfällt.

Durch die elektrische Antriebseinrichtung 8 ist sichergestellt, dass die Kapsel 15 automatisch ausgeworfen werden kann. Dadurch kann nach jedem Brühvorgang ein Spülvorgang eingeleitet werden, so dass verhindert wird, dass die Oberfläche der Brühkammer 6, des Auslasses 22 und der Leitung 24 verschmutzt. Das Spülen kann automatisch innerhalb von beispielsweise 30 Sekunden nach dem Brühvorgang durchgeführt werden, ohne dass der Benutzer den Spülvorgang auslösen muss.

Statt der gezeigten Antriebseinrichtung 8 mit der Spindel 81 können auch andere Antriebseinrichtungen eingesetzt werden, die die Brühkammer 6 linear bewegen oder auch verschwenken. Die Brühkammer 6 kann beispielsweise auch entlang einer Kurvenführung bewegt werden, um zwischen einer Einwurfposition, einer Brühposition und einer Auswurf- oder Spülposition bewegt zu werden.

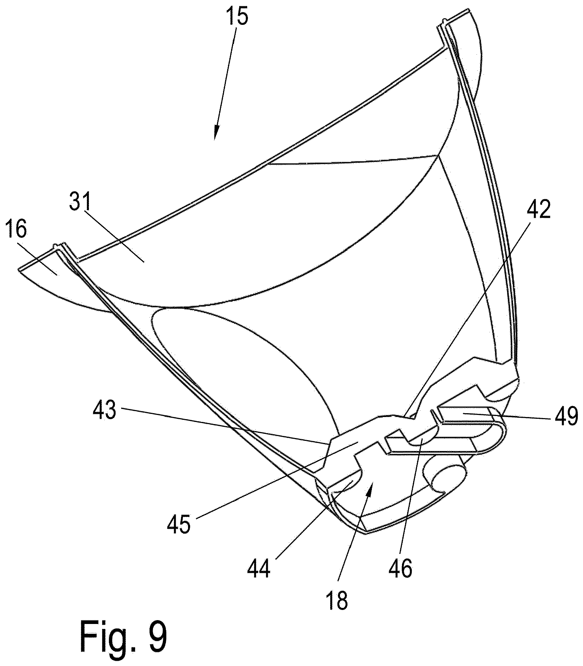

Die Kapsel 15 ist in Figur 9 im Schnitt gezeigt. Sie weist einen Innenraum auf, der über ein Sieb 31 oder ein Gitter verschlossen ist. Um das Aroma des Inhalts der Kapsel länger zu erhalten, kann das Sieb 31 oder das Gitter mit einer Abdeckfolie verschlossen sein, die dann vor dem Einwerfen in den Einwurfschacht 7 ganz oder teilweise entfernt wird. An dem gegenüberliegend angeordneten Boden 18 ist mindestens eine Einkoppelfläche 46, mindestens eine Lichtumlenkvorrichtungen 42 und 43 sowie mindestens eine Auskoppelfläche 44 vorgesehen, die für ein optisches Erkennungssystem eingesetzt werden. An dem Boden 18 sind hierfür Lichtleiter 45 ausgebildet. Ferner ist am Boden ein hervorstehendes Führungsprofil 49 ausgebildet, die mit den Führungsleisten 71 und 72 zusammenwirkt. In dem dargestellten Ausführungsbeispiel sind vier Auskoppelflächen 44 vorgesehen, an denen jeweils ein Lichtdetektor das Emittieren von Licht erfasst oder auch nicht erfasst. Dadurch ergeben sich am Boden 18 der Kapsel 15 vier Codierungen, so dass 16 unterschiedliche Kapseltypen erkannt werden können. Es ist natürlich auch möglich, die Anzahl der Auskoppelflächen 44 und Lichtdetektoren 36 zu variieren. Es ist auch möglich, die Lichtquellen und Lichtsensoren anders anzuordnen, so dass beispielsweise die Auskoppelflächen 44 zu Einkoppelflächen und die mittige Einkoppelfläche 46 zu einer Auskoppelfläche wird.

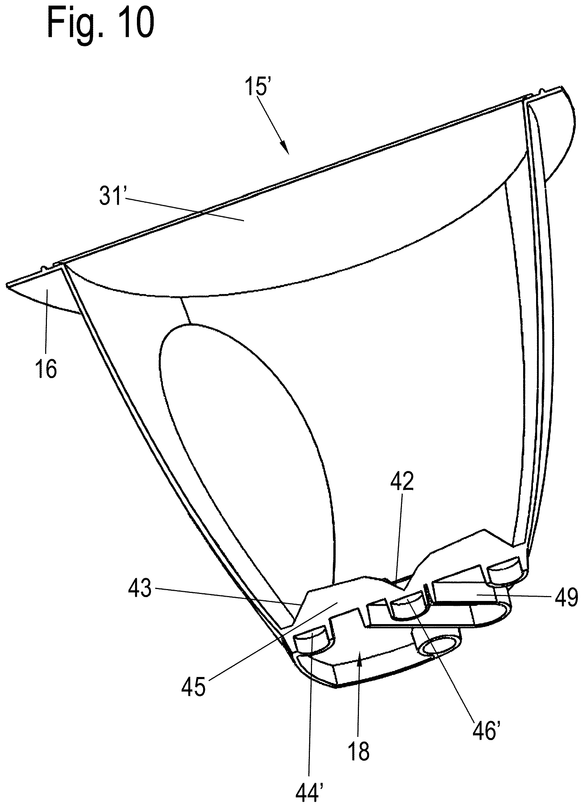

In Figur 10 ist eine gegenüber Figur 9 modifizierte Ausführungsform einer Kapsel 15' gezeigt. Die Kapsel 15' weist am Boden vier Auskoppelflächen 44' und eine Einkoppelfläche 46' auf, die jeweils in einer tassenförmigen Aufnahme geschützt angeordnet sind. Die parallel zur Fläche des Bodens 18 ausgerichteten Aus- und Einkoppelflächen 44' und 46' sind somit durch einen nach unten hervorstehenden Ring geschützt angeordnet. Ferner ist ein Sieb 31' an dem oberen Rand 16 der Kapsel 15' fixiert.

In dem dargestellten Ausführungsbeispiel ist die Brühkammer 6 einwandig ausgebildet, beispielsweise aus Kunststoff, Metall oder Glas. Es ist aber auch möglich, die Brühkammer 6 zur Erhöhung der Temperaturbeständigkeit zu isolieren, beispielsweise mit einer Umhüllung aus Isoliermaterial oder durch eine doppelwandige Ausbildung. Dann kann das Brühgetränk auch bei langen Ziehzeiten von beispielsweise über 5 Minuten ausreichend temperiert ausgegeben werden.

### Bezugszeichenliste

- 1: Vorrichtung
- 2: Sammelbehälter
- 3: Auflage
- 4: Gefäß
- 5: Griffabschnitt
- 6: Brühkammer
- 7: Einwurfschacht
- 8: Antriebseinrichtung
- 9: Tank
- 10: Pumpe
- 11: Heizeinrichtung
- 12: Leitung
- 13: Einlassleitung
- 14: Düse
- 15: Kapsel
- 16: Rand
- 17: Abschnitt
- 18: Boden
- 19: Halter
- 20: Öffnung
- 21: Innenraum
- 22: Auslass
- 23: Ventil
- 24: Leitung
- 25: Auslassstutzen
- 26: Durchführung
- 27: Leitelement
- 28: Sammelbecken
- 29: Sieb
- 30: Sammelbecken
- 31: Sieb
- 32: Dichtung
- 33: Vorsprung
- 35: Lesegerät
- 40: Öffnung
- 41: Öffnung
- 42: Lichtumlenkvorrichtung
- 43: Lichtumlenkvorrichtung
- 44: Einkoppelfläche
- 45: Lichtleiter
- 46: Auskoppelfläche
- 49: Führungsprofil
- 50: Gehäuse
- 70: Fläche
- 71: Führungsleiste
- 72: Führungsleiste
- 80: Elektromotor
- 81: Spindel
- 82: Spindelmutter
- 83: Arm
- 84: Halter
- 85: Führung

## Patentansprüche

1. Verfahren zur Zubereitung eines Brühgetränks, mit den folgenden Schritten:
a) Positionieren einer Kapsel (15) mit einem Inhaltsstoff zum Brühen des Getränks an einer seitlichen Öffnung (20) einer Brühkammer (6);
b) Erhitzen und Fördern von Wasser zu der Brühkammer (6);
c) Einlass des erhitzten Wassers in die Brühkammer (6);
d) Zubereitung des Getränks in der Brühkammer (6) unter Befüllung der Kapsel (15) mit erhitztem Wasser;
e) Öffnen eines Ventils an einem Auslass (22) und Befüllen eines Gefäßes (4) mit dem Brühgetränk;
f) Entfernen der Kapsel (15) von der seitlichen Öffnung (20) der Brühkammer (6),
g) Spülen der Brühkammer,
wobei nach dem Brühvorgang die Brühkammer (6) zusammen mit einem Einfüllstutzen (25) verfahren wird, **dadurch gekennzeichnet, dass** der Einfüllstutzen (25) von einer Einfüllposition oberhalb einer Durchführung (26) zum Befüllen des Gefäßes (4) in eine Spülposition oberhalb eines Leitelementes (27) bewegt und dann die Brühkammer (6) gespült wird.

2. Verfahren nach Anspruch 1, **dadurch gekennzeichnet, dass** zum Spülen der Brühkammer erhitztes Wasser über den Einlass in die Brühkammer (6) injiziert wird.

3. Verfahren nach Anspruch 1 oder 2, **dadurch gekennzeichnet, dass** nach dem Brühvorgang die Brühkammer (6) relativ zu einem Einwurfschacht (7) für die Kapsel (15) verfahren wird, um die Kapsel (15) in einem Sammelbehälter (2) abzuwerfen.

4. Verfahren nach einem der vorhergehenden Ansprüche, **dadurch gekennzeichnet, dass** ein Anschlag vorgesehen ist, der beim Verfahren der Brühkammer (6) aus der Brühposition in die Spülposition die Kapsel (15) von der Brühkammer (6) trennt.

5. Verfahren nach einem der vorhergehenden Ansprüche, **dadurch gekennzeichnet, dass** in der Brühkammer (6) Tee gebrüht wird.

6. Vorrichtung zur Zubereitung eines Brühgetränkes, umfassend:
a) eine Einrichtung (10, 11) zum Erhitzen und Fördern von Wasser;
b) eine Brühkammer (6), in die das erhitzte Wasser eingeleitet wird;
c) eine Positioniereinrichtung (19) zum Positionieren einer Kapsel (15) mit einem Inhaltsstoff zum Brühen eines Getränkes an einer seitlichen Öffnung (20) der Brühkammer (6);
d) einen Auslass (22) an einer Unterseite der Brühkammer (6);
e) einen Einlass an der Brühkammer (6) zum Einleiten von heißem Wasser,
f) eine Antriebseinrichtung (8), mittels der die Brühkammer (6) bewegbar ist und nach dem Brühvorgang die Brühkammer (6) zusammen mit einem Einfüllstutzen (25) verfahrbar ist,
g) **dadurch gekennzeichnet, dass** der Einlass eine Düse (14) mit mehreren über den Umfang verteilten Öffnungen (40) aufweist, und
h) der Einfüllstutzen (25) von einer Einfüllposition oberhalb einer Durchführung (26) zum Befüllen des Gefäßes (4) in eine Spülposition oberhalb eines Leitelementes (27) bewegbar ist.

7. Vorrichtung nach Anspruch 6, **dadurch gekennzeichnet, dass** die Düse (14) mit einer Spitze in einen Innenraum (21) der Brühkammer (6) hervorsteht und vorzugsweise mehrere über den Umfang verteilte Öffnungen besitzt.

8. Vorrichtung nach Anspruch 6 oder 7, **dadurch gekennzeichnet, dass** der Einlass an einer Oberseite der Brühkammer angeordnet ist und an dem Auslass ein schaltbares Ventil (23) vorgesehen ist, um die Länge der Brüh-oder Ziehzeit zu steuern.

9. Vorrichtung nach einem der Ansprüche 6 bis 8, **dadurch gekennzeichnet, dass** das Volumen der Brühkammer (6) mindestens doppelt so groß ist wie das Volumen der Kapsel (15) und zwischen der Brühkammer (6) und dem Innenraum (21) der Kapsel (15) ein Sieb (31) angeordnet ist.

10. Vorrichtung nach einem der Ansprüche 6 bis 9, **dadurch gekennzeichnet, dass** die seitliche Öffnung (20) der Brühkammer (6) oberhalb eines Sammelbehälters (2) angeordnet ist und beim Verfahren der Brühkammer (6) die Kapsel (15) in den Sammelbehälter (2) abfällt.

## Claims

1. A method for preparing a brewed beverage, comprising the following steps:
a) positioning a capsule (15) with an ingredient for brewing the beverage at a lateral opening (20) of a brewing chamber (6);
b) heating and conveying water to the brewing chamber (6);
c) introduction of the heated water into the brewing chamber (6);
d) preparation of the beverage in the brewing chamber (6) by filling the capsule (15) with heated water;
e) opening of a valve on an outlet (22) and filling a vessel (4) with the brewed beverage;
f) removal of the capsule (15) from the lateral opening (20) of the brewing chamber (6);
g) rinsing of the brewing chamber,
whereby after the brewing process the brewing chamber (6) is moved together with a feed nozzle (25), **characterized in that** the feed nozzle (25) is moved from a filling position above a passage (26) for filling the vessel (4) to a rinsing position above a guide element (27), whereupon the brewing chamber (6) is rinsed.

2. A method according to claim 1, **characterized in that** heated water is injected via the inlet into the brewing chamber (6) for rinsing the brewing chamber.

3. A method according to claim 1 or 2, **characterized in that** after the brewing process the brewing chamber (6) is moved relative to an insertion chute (7) for the capsule (15) in order to eject the capsule (15) to a collecting container (2).

4. A method according to one of the preceding claims, **characterized in that** a stop is provided which during the displacement of the brewing chamber (6) from the brewing position to the rinsing position separates the capsule (15) from the brewing chamber (6).

5. A method according to one of the preceding claims, **characterized in that** tea is brewed in the brewing chamber (6).

6. An apparatus for preparing a brewed beverage, comprising:
a) a device (10, 11) for heating and conveying water;
b) a brewing chamber (6) into which the heated water is introduced;
c) a positioning device (19) for positioning a capsule (15) with an ingredient for brewing a beverage at a lateral opening (20) of the brewing chamber (6);
d) an outlet (22) on a bottom side of the brewing chamber (6);
e) an inlet on the brewing chamber (6) for introducing hot water;
f) a drive device (8) by means of which the brewing chamber (6) can be moved, and the brewing chamber (6) can be moved together with a feed nozzle (25) after the brewing process,
g) **characterized in that** the inlet comprises a nozzle (14) with several openings (40) which are distributed over the circumference, and
h) the feed nozzle (25) can be moved from a filling position above a passage (26) for filling the vessel (4) to a rinsing position above a guide element (27).

7. An apparatus according to claim 6, **characterized in that** the nozzle (14) protrudes with a tip into an interior space (21) of the brewing chamber (6) and preferably comprises several openings distributed over the circumference.

8. An apparatus according to claim 6 or 7, **characterized in that** the inlet is arranged on an upper side of the brewing chamber and a switchable valve (23) provided on the outlet in order to control the length of the brewing or infusion time.

9. An apparatus according to one of the claims 6 to 8, **characterized in that** the volume of the brewing chamber (6) is at least twice as large as the volume of the capsule (15), and a screen (31) is arranged between the brewing chamber (6) and the interior space (21) of the capsule (15).

10. An apparatus according to one of the claims 6 to 9, **characterized in that** the lateral opening (20) of the brewing chamber (6) is arranged above a collecting container (2), and the capsule (15) drops into the collecting container (2) during the displacement of the brewing chamber (6).

## Revendications

1. Procédé de préparation d'une boisson infusée comprenant les étapes suivantes consistant à :
a) positionner une capsule (15) avec un contenu pour infuser la boisson sur une ouverture latérale (20) d'une chambre d'infusion (6),
b) chauffer et transférer l'eau dans la chambre d'infusion (6),
c) laisser entrer l'eau chaude dans la chambre d'infusion (6),
d) préparer la boisson dans la chambre d'infusion (6) en remplissant la capsule (15) avec l'eau chaude,
e) ouvrir une soupape de la sortie (22) et remplir un récipient (4) avec la boisson infusée,
f) enlever la capsule (15) de l'ouverture latérale (20) de la chambre d'infusion (6),
g) rincer la chambre d'infusion (6),
procédé selon lequel après la phase d'infusion, on déplace la chambre d'infusion (6) avec son bec déversoir (25),
procédé **caractérisé en ce qu'**
on déplace le bec déversoir (25) d'une position de remplissage au-dessus d'un passage (26) pour remplir le récipient (4) vers une position de rinçage au-dessus d'un élément de goulotte (27) et ensuite on rince la chambre d'infusion (6).

2. Procédé selon la revendication 1,
**caractérisé en ce que**
l'on injecte l'eau chaude par l'entrée dans la chambre d'infusion (6) pour rincer la chambre d'infusion.

3. Procédé selon les revendications 1 ou 2,
**caractérisé en ce qu'**
après la phase d'infusion on déplace la chambre d'infusion (6) par rapport à un puits d'introduction (7) de la capsule (15) pour éjecter la capsule (15) dans un réceptacle (2).

4. Procédé selon l'une des revendications précédentes,
**caractérisé en ce qu'**
il est prévu une butée qui sépare la capsule (15) de la chambre d'infusion (6) lors du déplacement de la chambre d'infusion (6) à partir de sa position d'infusion vers sa position de rinçage.

5. Procédé selon l'une des revendications précédentes,
**caractérisé en ce qu'**
on infuse du thé dans la chambre d'infusion (6).

6. Dispositif pour préparer une boisson infusée comprenant :
a) une installation (10, 11) pour chauffer l'eau et la transférer,
b) une chambre d'infusion (6) dans laquelle on introduit l'eau chaude,
c) une installation de positionnement (19) pour positionner une capsule (15) avec un contenu pour infuser une boisson contre une ouverture latérale (20) de la chambre d'infusion (6),
d) une sortie (22) sur le côté inférieur de la chambre d'infusion (6),
e) une entrée dans la chambre d'infusion (6) pour introduire l'eau chaude,
f) une installation d'entraînement (8) pour déplacer la chambre d'infusion (6) et après la phase d'infusion, déplacer la chambre d'infusion (6) avec un bec déversoir (25),
dispositif **caractérisé en ce que**
g) l'entrée comporte une buse (14) avec plusieurs orifices (40) répartis en périphérie,
h) le bec déversoir (25) est mobile entre une position de remplissage au-dessus d'un passage (26) pour remplir le récipient (4) et une position de rinçage au-dessus d'un élément de goulotte (27).

7. Dispositif selon la revendication 6,
**caractérisé en ce que**
la buse (14) vient en saillie avec une pointe dans le volume intérieur (21) de la chambre d'infusion (6) et comporte plusieurs ouvertures réparties en périphérie.

8. Dispositif selon les revendications 6 ou 7,
**caractérisé en ce que**
l'entrée est prévue sur le côté supérieur de la chambre d'infusion et la sortie comporte une soupape commandée (23) pour commander la durée de la phase d'infusion ou durée de prise de contact.

9. Dispositif selon l'une des revendications 6 à 8,
**caractérisé en ce que**
le volume de la chambre d'infusion (6) est au moins double du volume de la capsule (15) et un tamis (31) sépare la chambre d'infusion (6) et le volume intérieur (21) de la capsule (15).

10. Dispositif selon l'une des revendications 6 à 9,
**caractérisé en ce que**
l'ouverture latérale (20) de la chambre d'infusion (6) est au-dessus d'un réceptacle (2) et lors du déplacement de la chambre d'infusion (6), la capsule (15) tombe dans le réceptacle (2).
